# NEUE EUROPÄISCHE PATENTSCHRIFT

(11) **EP 1 036 034 B2**
(45) Veröffentlichungstag und Bekanntmachung des Hinweises auf die Entscheidung über den Einspruch: **21.11.2007**
(45) Hinweis auf die Patenterteilung: 25.07.2001
(21) Anmeldenummer: 98962288.1
(22) Anmeldetag: 25.11.1998
(51) Int. Cl.: C01B 31/08, C01B 31/10

(54) **HERSTELLUNG VON AKTIVKOHLE AUS POLYMEREN MIT AROMATISCHEN KERNEN**
PRODUCTION OF ACTIVE CARBON FROM POLYMERS WITH AROMATIC NUCLEI
PRODUCTION DE CHARBON ACTIF A PARTIR DE POLYMERES A NOYAUX AROMATIQUES

(30) Priorität: 27.11.1997 DE 19752593
(43) Veröffentlichungstag der Anmeldung: 20.09.2000
(73) Patentinhaber: HELSA-WERKE Helmut Sandler GmbH & Co. KG, 95482 Gefrees (DE)
(72) Erfinder: HESCHEL, Wolfgang, D-09599 Freiberg (DE); MÜLLER, Dirk, D-08056 Zwickau (DE)
(74) Vertreter: LOUIS, PÖHLAU, LOHRENTZ
(86) Internationale Anmeldenummer: PCT/DE1998/003513
(87) Internationale Veröffentlichungsnummer: WO 1999/028234

(56) Entgegenhaltungen:
- EP-A- 0 285 321
- EP-A- 0 326 271
- EP-A1- 0 802 882
- WO-A-96/21616
- DD-A- 63 768
- FR-A- 2 687 941
- GB-A- 2 280 898
- US-A- 3 158 583
- CHEMICAL ABSTRACTS, vol. 107, no. 26, 28. Dezember 1987 Columbus, Ohio, US; abstract no. 239318, OKIDO SADAO : "Carbonization of synthetic resin" XP002040873 & JP 62 197308 A (JAPAN ORGANO CO., LTD; KURARAY CHEMICAL CO., LTD)
- CHEMICAL ABSTRACTS, vol. 89, no. 22, 27. November 1978 Columbus, Ohio, US; abstract no. 181873, MURAKAMI YOSHIAKI & AL.: "Granular activated carbon" XP002040874 & JP 53 050088 A8. Mai 1978
- DATABASE WPI Section Ch, Week 9745 Derwent Publications Ltd., London, GB; Class A13, AN 97-488132 XP002099118 & RU 2 077 479 C (EKOFOR STOCK CO) , 20. April 1997
- DATABASE WPI Section Ch, Week 7716 Derwent Publications Ltd., London, GB; Class A35, AN 77-27993Y XP002099119 & JP 52 030800 A (SUMITOMO CHEM CO LTD) , 8. März 1977
- CHEMICAL ABSTRACTS, vol. 110, no. 10, 6. März 1989 Columbus, Ohio, US; abstract no. 76950, ARTYUSHENKO V. & AL.: "Activation of styrene-divinylbenzene copolymer in a fluidized bed" XP002040969 & KHIM. TEKHNOL., Nr. 6, 1988, Seiten 45-51,
- CHEMICAL ABSTRACTS, vol. 119, no. 4, 26. Juli 1993 Columbus, Ohio, US; abstract no. 30980n, SENTEK JAN & AL.: "Manufature of a carbon sorbent for medical use" XP002099117 & PRZEM. CHEM. , Bd. 72, Nr. 5, 1993, Seiten 205-207,
- Römpp Chemie Lexikon, Band 5, 9. Auflage 1995, Seiten 4070 bis 4073
- Merck Tabellen, Seite 4
- J.D. Roberts & M.C. Caserio:" Basic Principles Of Organic Chemistry", W.A. Benjamin Inc. 1965, Seite 797

## Beschreibung

Die vorliegende Erfindung betrifft die Herstellung von Aktivkohle aus Polymeren mit aromatischen Kernen, insbesondere aus Styrol-Divinylbenzol-Copolymeren.

Aktivkohlen sind seit langer Zeit bekannt und besitzen ein breites Einsatzspektrum im Bereich der Reinigung von Rauchgasen und Abwasser, wobei diese Verwendung auf dem hohen Adsorptionsvermögen der Aktivkohle beruht. Im allgemeinen weisen Aktivkohlen ein breites Adsorptionsspektrum auf. Solche Aktivkohlen sind nicht für einen speziellen Anwendungsfall ogtimiert, dafür aber kostengünstig als Massenprodukt herzustellen.

Hochleistungsaktivkohlen hingegen sind für spezielle Anwendungsfälle optimiert und verursachen entsprechend höhere Produktionskosten.

Seit einigen Jahren ist bekannt, zur Herstellung von Aktivkohlen von Polymeren mit aromatischen Kernen auszugehen, hierbei insbesondere von Styrol-Divinylbenzol-Copolymeren.

Aus der EP 0 326 271 B1 ist die Herstellung von Aktivkohle, insbesondere aus Styrol-Divinylbenzol-Copolymeren, bekannt, wobei das Copolymer zuerst mit einem großen Überschuß an rauchender Schwefelsäure oder Oleum für einen längeren Zeitraum behandelt wird. Nach erfolgter Sulfonierung wird das polysulfonierte Copolymer zur Entfernung von überschüssiger Säure gewaschen und anschließend getrocknet. Die erhaltenen Aktivkohlen besitzen eine multimodale Porengrößenverteilung, d.h. die offenbarte Aktivkohle besitzt gleichzeitig Poren unterschiedlicher Porengrößen, wobei eine Steuerung der Porengrößenverteilung oder eine entsprechende Beeinflussung nicht offenbart ist.

Aus der WO 96/21616 ist ein Verfahren bekannt, bei dem ein Styrol-Divinylbenzol-Copolymer mit 5 bis 50 % Schwefelsäure bei einer Temperatur bis zu 750 °C verschwelt bzw. pyrolysiert wird. Im Gegensatz zu der in der EP 0 326 271 B1 angestrebten Polysulfonierung der aromatischen Kerne als Vorstufe für die Aktivkohleherstellung reicht die gemäß der WO96/21616 einzusetzende Schwefelsäuremenge noch nicht einmal für eine vollständige Monosulfonierung sämtlicher aromatischer Kerne. Hieraus folgt aber ein vergleichsweise hoher Masseverlust während der Pyrolyse, was bedeutet, daß das Verfahren aufgrund der geringen Ausbeute vergleichsweise kostenintensiv ist. Die Porengröße oder die Porengrößenverteilung bei der Aktivkohle gemäß der WO 96/21616 sind nicht erwähnt.

Es ist nunmehr Aufgabe der vorliegenden Erfindung, ein Verfahren zur Herstellung von Aktivkohle aus Polymeren mit aromatischen Kernen, insbesondere aus Styrol-Divinylbenzol-Copolymeren anzugeben, das wirtschaftlich durchführbar ist und zu Aktivkohle mit verbesserten Eigenschaften führt.

Diese Aufgabe wird durch das eingangs erwähnte Verfahren mit den Schritten:
a) Sulfonieren des Polymers mit aromatischen Kernen mit konz. H₂SO₄, wobei das Verhältnis der Masse der verwendeten konz. H₂SO₄ zu der Masse des eingesetzten Polymers 0,5:1 bis 4:1 ist,
b) Abfiltrieren der überschüssigen Schwefelsäure nach dem Sulfonieren und sodann Verkoken bzw. Pyrolysieren des ungewaschenen sulfonierten Produkts; und optional
c) Aktivieren des durch das Verkoken bzw.Pyrolysieren erhaltenen Kokses
gelöst.

Es ist dabei insbesondere von Vorzug, wenn in Schritt a) das Verhältnis der Masse der verwendeten konz. H₂SO₄ zu der Masse des eingesetzten Polymers 1:1 bis 4:1 ist.

Ein besonderer Vorteil des erfindungsgemäßen Verfahrens liegt darin, daß das Polymer nach erfolgter Sulfonierung nur von der überschüssigen Schwefelsäure abfiltriert wird und nicht gewaschen werden muß, wobei gleichzeitig die Gesamtausbeute an erhaltener Aktivkohle ausreichend hoch ist. Gleichzeitig kann mit handelsüblicher Schwefelsäure gearbeitet werden, die ein äußerst günstiges Ausgangsprodukt darstellt, wobei die überschüssige Schwefelsäure weiterhin für nachfolgende Sulfonierungen verwendet werden kann. Überraschenderweise ist gefunden worden, daß durch Variation der Reaktionsbedingungen bei der Aktivkohleherstellung Aktivkohlen mit unterschiedlichen Eigenschaftsprofilen gezielt hergestellt werden können.

In einer bevorzugten Ausgestaltung des erfindungsgemäßen Verfahrens wird das Polymer in Schritt a) bei Umgebungstemperatur zum Sulfonieren mit konz. H₂SO₄ versetzt und auf eine Sulfonierungstemperatur im Bereich von 110 bis 160 °C aufgeheizt. Das Aufheizen auf die Sulfonierungstemperatur erfolgt dabei mit einer Rate von etwa 3 bis 20 K/min., bevorzugt mit einer Rate von 10 bis 20 K/min. und besonders bevorzugt mit einer Rate von 15 K/min. Als Ergebnis wird eine aus zusammengesinterten Einzelpartikeln bestehende Aktivkohle mit vergleichsweise poröser Struktur erhalten.

Es ist weiterhin bevorzugt, wenn das Gemisch aus Polymeren und konzentrierter Schwefelsäure für eine Zeit im Bereich von 0 bis 60 min. auf der Sulfonierungstemperatur gehalten wird.

Der hohe Sintergrad läßt sich weiterhin dadurch beeinflussen, daß die Menge der eingesetzten Schwefelsäure begrenzt wird. Es ist daher zum Erreichen eines hohen Sintergrades bevorzugt, wenn das Verhältnis der Masse der verwendeten konzentrierten Schwefelsäure zu der Masse des eingesetzten Polymeren 1:1 bis 2:1 ist.

Nach dem Abfiltrieren der überschüssigen Schwefelsäure von dem sulfonierten Produkt wird dasselbe in Schritt b) zum Verkoken bzw. Pyrolysieren auf eine Temperatur von 650 bis 850 °C gebracht, bevorzugt auf eine Temperatur im Bereich von 700 bis 800 °C. Es ist besonders bevorzugt, die Pyrolyse bei einer Temperatur von 750 °C durchzuführen.

Der Sintergrad der Aktivkohle wird überraschenderweise auch von der Geschwindigkeit, mit der das sulfonierte Produkt auf die Pyrolysetemperatur aufgeheizt wird und durch die Haltezeit bei der Pyrolysetemperatur beeinflußt. Zum Erhalt von Sinterkörpern ist daher eine vergleichsweise niedrige Aufheizrate und eine vergleichsweise kurze Haltezeit bei der Pyrolysetemperatur am zweckmäßigsten. Das sulfonierte Polymer wird daher mit einer Geschwindigkeit von 1 bis 10 K/min, auf Pyrolysetemperatur gebracht, bevorzugt mit einer Geschwindigkeit von 5 bis 10 K/min, und besonders bevorzugt mit einer Geschwindigkeit im Bereich von 8 bis 10 K/min. In einer bevorzugten Ausgestaltung des erfindungsgemäßen Verfahrens wird die Pyrolysetemperatur für einen Zeitraum von 2 bis 10 min. beibehalten, insbesondere für einen Zeitraum von 3 bis 7 min.

In einer weiteren besonders bevorzugten Ausgestaltung der vorliegenden Erfindung wird das Polymer in Schritt a) bei Umgebungstemperaturen zum Sulfonieren mit konzentrierter Schwefelsäure versetzt und auf eine Sulfonierungstemperatur im Bereich von 130 bis 300 °C aufgeheizt, bevorzugt auf eine Sulfonierungstemperatur im Bereich von 130 bis 200 °C. Es wird dabei überraschend eine nicht zusammengesinterte, rieselfähige Aktivkohle erhalten, die darüberhinaus Poren mit einem äußerst geringen Durchmesser aufweist. Überraschend wurde festgestellt, daß der Zustand der Rieselfähigkeit dann eintritt, wenn der Schwefelgehalt im Pyrolysekoks größer 4 % ist.

In einer bevorzugten Ausgestaltung dieser Verfahrensvariante wird das Aufheizen auf die Sulfonierungstemperatur mit einer Rate von etwa 3 bis 20 K/min. durchgeführt, bevorzugt mit einer Rate von 10 bis 20 K/min.

Zum Erhalt von einem kleinen Porenradius in der Aktivkohle ist es bevorzugt, die Pyrolyse nach Erreichen der Pyrolysetemperatur zu beenden. Es ist weiterhin bevorzugt, wenn das Verhältnis der Masse der verwendeten konzentrierten Schwefelsäure zu der Masse des eingesetzten Polymers 2:1 ist. Auch bei dieser Ausgestaltung des erfindungsgemäßen Verfahrens wird die Pyrolyse bei einer Temperatur im Bereich von 650 bis 850 °C durchgeführt, bevorzugt in einem Temperaturbereich von 700 bis 800 °C und besonders bevorzugt bei 750 °C. Es ist jedoch bevorzugt, wenn das Aufheizen auf die Pyrolysetemperatur mit einer Rate von 20 bis 50 K/min, erfolgt, bevorzugt mit einer Rate von 50 K/min., da die Sinterneigung bei einer höheren Aufheizrate geringer ist. Es ist weiterhin bevorzugt, wenn die Pyrolysetemperatur für einen Zeitraum von 0 bis 10 min., insbesondere für einen Zeitraum von 3 bis 7 min. gehalten wird.

Die erhaltene engporige Aktivkohle wird gewöhnlich zur Verbesserung ihrer Eigenschaften noch einer weiteren Aktivierung unterworfen. Diese Aktivierung findet bevorzugt bei einer Temperatur im Bereich von 900 bis 960 °C statt, wobei allgemein ein Aktivierungsgas verwendet wird, das aus 55 Vol.-% N₂, 10 Vol-% CO₂ und 35 Vol.-% H₂O besteht.

Es ist dabei bevorzugt, wenn das Aktivierungsgas ab einer Temperatur von 500 °C über die Aktivkohle geleitet wird, wobei die Aktivierung für einen Zeitraum von 30 bis 360 Minuten durchgeführt wird, insbesondere für einen Zeitraum von 60 bis 120 Minuten, wobei jedoch der während des Aktivierens stattfindende Abbrand maßgeblich ist. Es ist daher besonders bevorzugt, die Aktivierung bis zu einem Abbrand von 40 bis 75 % durchzuführen, insbesondere bis zu einem Abbrand von 40 bis 50 %.

In einer weiteren erfindungsgemäßen Ausgestaltung der Erfindung wird das Polymer in Schritt a) bei Umgebungstemperatur zum Sulfonieren mit konzentrierter Schwefelsäure versetzt und auf eine Sulfonierungstemperatur im Bereich von 150 bis 200 °C aufgeheizt, bevorzugt auf 150 °C. Durch diese Variation des Sulfonierungsschrittes wird überraschenderweise eine Aktivkohle mit einem im wesentlichen vergleichsweise großen Porenradius erhalten. Dies ist besonders vorteilhaft, da gegenüber einer "engporigen" Aktivkohle, die über eine große Adsorptionskapazität verfügt, eine "weitporige" Aktivkohle eine besonders hohe Adsorptionskinetik zeigt, wobei auch die weitporige Aktivkohle aus nicht gesinterten, rieselfähigen Partikeln besteht. Es ist dabei bevorzugt, wenn das Aufheizen auf Sulfonierungstemperatur in Schritt a) mit einer Rate von etwa 1 bis 20 K/min erfolgt, bevorzugt mit einer Rate von 1 bis 4 K/min., wobei die Sulfonierungstemperatur bevorzugt über einen Zeitraum von 0 bis 240 min. gehalten wird, besonders bevorzugt über einen Zeitraum von 120 bis 240 min. Das Verhältnis der Masse der verwendeten konzentrierten Schwefelsäure zu der Masse des eingesetzten Polymers ist bevorzugt 2:1.

Die Pyrolyse des nach dieser Sulfonierungsvariante sulfonierten Polymers erfolgt wie bereits bei den anderen Sulfonierungsvarianten erwähnten bevorzugten Temperaturen, wobei bevorzugt mit einer Rate von 3 bis 50 K/min. auf Pyrolysetemperatur aufgeheizt wird und besonders bevorzugt mit einer Rate von 15 bis 25 K/min. Die Pyrolysetemperatur wird dann bevorzugt für einen Zeitraum von 0 bis 10 min. gehalten, besonders bevorzugt für einen Zeitraum von 3 bis 7 min.

Allgemein wird bei der Aktivkohle nach dieser Verfahrensvariante anschließend noch eine Aktivierung durchgeführt. Diese Aktivierung findet bevorzugt in einem Temperaturbereich von 900 bis 960 °C statt und das Aktivierungsgas hat bevorzugt dieselbe Zusammensetzung wie das bei der Herstellung der engporigen Aktivkohle beschriebene Aktivierungsgas. Es wird ebenfalls bevorzugt ab einer Temperatur von 500 °C zugegeben, wobei die Aktivierung bevorzugt für einen Zeitraum von 30 bis 360 min. durchgeführt wird, besonders bevorzugt für einen Zeitraum von 90 bis 240 min., wobei jedoch der erzielte Abbrand von entscheidender Bedeutung ist. Die Aktivierung wird daher bevorzugt solange durchgeführt, bis ein Abbrand von 60 bis 90 % erreicht ist, insbesondere bis ein Abbrand von 60 % erreicht ist.

Im nachfolgenden wird die vorliegende Erfindung anhand von Beispielen näher erläutert.

Mit den hergestellten Aktivkohlen wurden eine Reihe von Untersuchungen angestellt, um die Proben untereinander vergleichen zu können. Neben der Ermittlung des Abbrandes, des Schwefelgehalts im Aktivat, der Dichten und der Porosität wurde noch die Porenstruktur durch Quecksilber-Porosimetrie und N₂-Sorptometrie bei 77 K analysiert. Mit Hilfe dieser Verfahren konnten unter anderem die charakteristischen Werte für die BET-Oberfläche (DIN 66131), für den Methylenblautiter zum Nachweis von Poren mit einem Durchmesser < 1,5 nm (vergleiche von Kienle, H, Bäder, E. "Aktivkohle und ihre industrielle Anwendung" F.

Enke Verlag, Stuttgart 1980) für das Porenvolumen und die Porenvolumenverteilung bestimmt werden.

Die BET-Oberfläche zur Charakterisierung der spezifischen Oberfläche wurde aus der Adsorptionsisotherme aus Stickstoff bei 77 K ermittelt. Die Auswertung beruht auf der Annahme einer monomolekularen Bedeckung der inneren Oberfläche der Partikel, woraus die zahlenmäßige Größe der Oberfläche berechnet werden kann. Die Aufnahme der Isotherme erfolgt mit einem Oberflächenmeßgerät der Firma Quantachrom. Die Berechnung der Oberfläche beruhte auf der BET-Isothermengleichung für folgende 3 Relativdrücke 0,05, 0,075 und 0,1.

Das Gesamtporenvolumen und die Porosität wurden aus der Roh- und der Reindichte der untersuchten Proben berechnet.

Zur Bestimmung der Porenradienverteilung im Meso- und Makroporenbereich wird die Quecksilber-Porosimetrie angewandt (vergleiche von Kienle H., Bäder, E., "Aktivkohle und ihre industrielle Anwendung" F. Enke Verlag, Stuttgart 1980). Dieses Meßverfahren beruht darauf, daß flüssiges Quecksilber die Kohlenstoffoberflächen nicht benetzt. Es dringt nur unter Einwirkung eines äußeren Druckes in Poren ein. Dieser Druck ist eine Funktion der Porengröße. Die Bestimmung der prozentualen Aufteilung des Gesamtporenvolumens in Mikro-, Meso- und Makroporen erfolgt im vorliegenden Fall mit dem Porosimeter 2000 der Firma Fison Instruments. Bei diesem Verfahren wird Quecksilber von Vakuum (0,1 bar) bis zu einem Druck von 2000 bar stufenweise in die Poren der zu untersuchenden Probe gedrückt und die aufgenommene Menge bei den einzelnen Drücken registriert und aufgezeichnet. Da ein Zusammenhang zwischen Druck und Porenradius besteht, kann die genaue Verteilung des Porenvolumens ermittelt werden.

Aufgrund des möglichen Maximaldruckes von 2000 bar können nur Poren mit einem Durchmesser größer 7,6 nm erfaßt werden. Abweichend von der IUPAC-Norm werden daher die Porenbereiche wie folgt festgelegt:
Mikroporen < 7,6 nm,
Mesoporen 7,6 bis 50 nm
Makroporen > 50 nm

Der Mikroporenanteil wird aus der Differenz des Gesamtporenvolumens und des durch Quecksilber-Porosimetrie erfaßten Volumens (Meso- und Makroporen) gebildet.

Zur Herstellung von Aktivkohle wurde dabei jeweils von einem gelförmigen Vorprodukt eines Kationenaustauscher vom Typ eines Styrol-Divinylbenzol-Copolymers ausgegangen. Der Divinylbenzol-Anteil dieses Styrol-Divinylbenzol-Copolymers betrug 8 %. Bei den nachfolgenden Beispielen wurde dieses Styrol-Divinylbenzol-Copolymer dann mit einer entsprechenden Menge Schwefelsäure versetzt und unter den nachfolgend angegebenen Bedingungen sulfoniert, pyrolysiert und aktiviert, wobei nach Erreichen der Sulfonierungstemperatur und einer entsprechenden Haltezeit sofort abgekühlt und die überschüssige Schwefelsäure abfiltriert wurde. Anschließend wurde entsprechend pyrolysiert und aktiviert. Der erhaltene Verkokungsrückstand wurde nachfolgend zur Bestimmung des Sintergrades 5 min. lang auf einem Sieb der Maschenweite 1 mm mit einer Siebmaschine abgesiebt und der Siebrückstand wird dann bestimmt.

### Beispiel 1:

### Sulfonierungsbedingung

- Sulfonierungstemperatur: 110 °C
- Aufheizgeschwindigkeit: 15 K/min.
- Haltezeit: 60 min.
- Masseneinsatzverhältnis: m_{H2}SO₄/m_{Copolymer} 2:1

### Verkokungsbedingung

- Aufheizrate: 9 K/min.
- Temperatur: 750 °C
- Schwefelgehalt (Koks): 2,16 %
- Haltezeit: 5 min.
- Sintergrad: 86,4 %

### Beispiel 2:

### Sulfonierungsbedingung

- Sulfonierungstemperatur: 120 °C
- Aufheizgeschwindigkeit: 15 K/min.
- Haltezeit: 60 min.
- Masseneinsatzverhältnis: m_{H2}SO₄/m_{Copolymer}<2:1

### Verkokungsbedingung

- Aufheizrate: 9 K/min.
- Temperatur: 750 °C
- Schwefelgehalt (Koks): 2,04 %
- Haltezeit: 5 min.
- Sintergrad: 83,5 %

### Beispiel 3:

### Sulfonierungsbedingung

- Sulfonierungstemperatur: 130 °C
- Aufheizgeschwindigkeit: 15 K/min.
- Haltezeit: 60 min.
- Masseneinsatzverhältnis: m_{H2}SO₄/m_{Copolymer}<2:1

### Verkokungsbedingung

- Aufheizrate: 9 K/min
- Temperatur: 750 °C
- Schwefelgehalt (Koks) 3,56 %
- Haltezeit: 5 min.
- Sintergrad: 83,4 %

### Beispiel 4:

### Sulfonierungsbedingung

- Sulfonierungstemperatur: 140 °C
- Aufheizgeschwindigkeit: 15 K/min.
- Haltezeit: 0 min.
- Masseneinsatzverhältnis: m_{H2}SO₄/m_{Copolymer}<2:1

### Verkokungsbedingung

- Aufheizrate: 9 K/min.
- Temperatur: 750 °C
- Schwefelgehalt (Koks): 1,95 %
- Haltezeit: 5 min.
- Sintergrad 87,5 %

### Beispiel 5:

### Sulfonierungsbedingungen

- Sulfonierungstemperatur: 150 °C
- Aufheizgeschwindigkeit: 15 K/min.
- Haltezeit: 0 min.
- Masseneinsatzverhältn.: m_{H2}SO₄/m_{Copolymer}<2:1

### Verkokungsbedingung

- Aufheizrate: 9 K/min.
- Temperatur: 750 °C
- Schwefelgehalt (Koks) 1,74 %
- Haltezeit: 5 min.
- Sintergrad: 81 %

### Beispiel 6:

### Sulfonierungsbedingung

- Sulfonierungstemperatur: 160 °C
- Aufheizgeschwindigkeit: 15 K/min.
- Haltezeit: 0 min.
- Masseneinsatzverhältn.: m_{H2}SO₄/m_{Copolymer}<2:1

### Verkokungsbedingung:

- Aufheizrate: 9 K/min.
- Temperatur: 750 °C
- Schwefeigehalt (Koks): 1,87 %
- Haltezeit: 5 min.
- Sintergrad: 83,3 %

Die so hergestellte Aktivkohle besteht aus porösen Sinterkörpern, wobei auffällt, daß der Schwefelgehalt der porösen Sinterkörper unter 4 % liegt. Bei einer Veränderung der Sulfonierungsbedingungen, z.B. bei Erhöhung der Sulfonierungstemperatur, erhöht sich zwar der Schwefelgehalt, gleichzeitig ändert sich aber die Erscheinung des Produkts von einem gesinterten Produkt zu einem rieselfähigen Produkt wie es aus den nachfolgenden Beispielen 7 bis 9 hervorgeht.

### Beispiel 7:

### Sulfonierungsbedingung

- Sulfonierungstemperatur: 140 °C
- Aufheizgeschwindigkeit: 15 K/min.
- Haltezeit: 15 min.
- Masseneinsatzverhältnis: m_{H2}SO₄/m_{Copolymer}<2:1

### Verkokungsbedingung:

- Aufheizrate: 9 K/min.
- Temperatur: 750 °C
- Schwefelgehalt (Koks) 5,6 %
- Haltezeit: 5 min.
- Sintergrad: 22,1 %

### Beispiel 8:

### Sulfonierungsbedingung

- Sulfonierungstemperatur: 130 °C
- Aufheizgeschwindigkeit: 15 K/min.
- Haltezeit: 120 min.
- Masseneinsatzverhältnis: m_{H2}SO₄/m_{Copolymer}<2:1

### Verkokungsbedingung

- Aufheizrate: 9 K/min.
- Temperatur: 750 °C
- Schwefelgehalt (Koks) 5,23 %
- Haltezeit: 5 min.
- Sintergrad: 24,7 %

### Beispiel 9:

### Sulfonierungsbedingung

- Sulfonierungstemperatur: 170 °C
- Aufheizgeschwindigkeit: 15 K/min.
- Haltezeit: 0 min.
- Masseneinsatzverhältnis: m_{H2}SO₄/m_{Copolymer}<2:1

### Verkokungsbedingung

- Aufheizrate: 9 K/min.
- Temperatur: 750 °C
- Schwefelgehalt (Koks) 6,27 %
- Haltezeit: 5 min.
- Sintergrad: 16,8 %

Durch gezielte Einstellung der Reaktionsbedingungen läßt sich eine "engporige" Aktivkohle herstellen, die sich aufgrund ihres besonders hohen Anteils an Mikroporen, d.h. Poren mit einem vergleichsweise kleinen Porenradius, durch eine hohe Adsorptionskapazität auszeichnet. Die nachfolgenden Beispiele zeigen dabei genau die Eigenschaften der erhaltenen Aktivkohle sowie die Ausbeute mit Bezug auf das Ausgangscopolymer.

### Beispiel 10:

### Sulfonierungsbedingung

- Sulfonierungstemperatur: 200 °C
- Aufheizgeschwindigkeit: 10 K/min.
- Haltezeit: 0 min.
- Masseneinsatzverhältnis: m_{H2}SO₄/m_{Copolymer}=2:1

### Verkokungsbedingung

- Aufheizrate: 50 K/min.
- Temperatur: 750 °C
- Schwefelgehalt (Koks) 6,61 %
- Haltezeit: 5 min.
- Sintergrad: 2,3 %

### Aktivierungsbedingung

- Temperatur: 960 °C
- Zugabe Aktivierungsgas: 500 °C
- Dauer: 90 min.
- Aktivierungszusammensetzung: N₂(55 Vol.-%)/CO₂(10 Vol.-%)/H₂O_{D}(35 Vol .-%)
- Schwefelgehalt (Aktivat): 3,0 %
- Abbrand: 44,5 %

### Eigenschaften:

- Rütteldichte: 0,553 g/cm³
- Rohdichte: 0,938 g/cm³
- MBT: 25 ml/0,1 g
- BET: 1395 m²/g
- Gesamtporenvolumen: 602 mm³/g
- Makroporen: 55 mm³/g = 9 %
- Mesoporen: 21 mm³/g = 3,5 %
- Mikroporen: 526 mm³/g = 87,5 %
- Ausbeute bezgl. Copolymer 54,2 %

### Beispiel 11:

### Sulfonierungsbedingung

- Sulfonierungstemperatur: 200 °C
- Aufheizgeschwindigkeit: 10 K/min.
- Haltezeit: 0 min.
- Masseneinsatzverhältnis: m_{H2}SO₄/m_{Copolymer}=2:1

### Verkokungsbedingung

- Aufheizrate: 50 K/min.
- Temperatur: 750 °C
- Schwefelgehalt (Koks) 6,61 %
- Haltezeit: 5 min.
- Sintergrad: 2,3 %

### Aktivierungsbedingung

- Temperatur: 960 °C
- Zugabe Aktivierungsgas: 500 °C
- Dauer: 180 min.
- Aktivierungszusammensetzung: N₂(55 Vol.-%)/CO₂(10 Vol.-%)/H₂O_{D}(35 Vol.-%)
- Schwefelgehalt (Aktivat): 1,95 %
- Abbrand: 73,2 %

### Eigenschaften:

- Rütteldichte: 0,374 g/cm³
- Rohdichte: 0,637 g/cm³
- MBT: 40 ml/0,1 g
- BET: 2236 m²/g
- Gesamtporenvolumen: 1125 mm³/g
- Makroporen: 125 mm³/g = 11 %
- Mesoporen: 136 mm³/g = 12 %
- Mikroporen: 864 mm³/g = 77 %
- Ausbeute bezgl. Copolymer 26,1 %

### Beispiel 12:

### Sulfonierungsbedingung

- Sulfonierungstemperatur: 200 °C
- Aufheizgeschwindigkeit: 10 K/min.
- Haltezeit: 0 min.
- Masseneinsatzverhältnis: m_{H2}SO₄/m_{Copolymer}=2:1

### Verkokungsbedingung

- Aufheizrate: 20 K/min.
- Temperatur: 750 °C
- Schwefelgehalt (Koks) 6,73 %
- Haltezeit: 5 min.
- Sintergrad: 2,65 %

### Aktivierungsbedingung

- Temperatur: 900 °C
- Zugabe Aktivierungsgas: 500 °C
- Dauer: 240 min.
- Aktivierungszusammensetzung: N₂(55 Vol.-%)/CO₂(10 Vol.-%)/H₂O_{D}(35 Vol.-%)
- Schwefelgehalt (Aktivat): 2,93 %
- Abbrand: 60,8 %

### Eigenschaften:

- Rütteldichte: 0,480 g/cm³
- Rohdichte: 0,780 g/cm³
- MBT: 31 ml/0,1 g
- BET: 1746 m²/g
- Gesamtporenvolumen: 822 mm³/g
- Makroporen: 103 mm³/g = 13 %
- Mesoporen: 98 mm³/g = 12 %
- Mikroporen: 621 mm³/g = 75 %
- Ausbeute bezgl. Copolymer 39,7 %

### Beispiel 13:

### Sulfonierungsbedingung

- Sulfonierungstemperatur: 200 °C
- Aufheizgeschwindigkeit: 10 K/min.
- Haltezeit: 0 min.
- Masseneinsatzverhältnis: m_{H2}SO₄/m_{Copolymer}=2:1

### Verkokungsbedingung

- Aufheizrate: 20 K/min.
- Temperatur: 750 °C
- Schwefelgehalt (Koks) 6,73 %
- Haltezeit: 5 min.
- Sintergrad: 2,65 %

### Aktivierungsbedingung

- Temperatur: 900 °C
- Zugabe Aktivierungsgas: 500 °C
- Dauer: 180 min.
- Aktivierungszusammensetzung: N₂(55 Vol.-%)/CO₂(10 Vol.-%)/H₂O_{D}(35 Vol.-%)
- Schwefelgehalt (Aktivat): 3,6 %
- Abbrand: 51,4 %

### Eigenschaften:

- Rütteldichte: 0,561 g/cm³
- Rohdichte: 0,957 g/cm³
- MBT: 25 ml/0,1 g
- BET: 1383 m²/g
- Gesamtporenvolumen: 592 mm³/g
- Makroporen: 55 mm³/g = 9 %
- Mesoporen: 46 mm³/g = 8 %
- Mikroporen: 491 mm³/g = 83 %
- Ausbeute bezgl. Copolymer 49,3 %

### Beispiel 14:

### Sulfonierungsbedingung

- Sulfonierungstemperatur: 200 °C
- Aufheizgeschwindigkeit: 10 K/min.
- Haltezeit: 0 min.
- Masseneinsatzverhältnis: m_{H2}SO₄/m_{Copolymer}=2:1

### Verkokungsbedingung

- Aufheizrate: 20 K/min.
- Temperatur: 750 °C
- Schwefelgehalt (Koks) 6,73 %
- Haltezeit: 5 min.
- Sintergrad: 2,65 %

### Aktivierungsbedingung

- Temperatur: 960 °C
- Zugabe Aktivierungsgas: 500 °C
- Dauer: 120 min.
- Aktivierungszusammensetzung: N₂(55 Vol.-%)/CO₂(10 Vol.-%)/H₂O_{D}(35 Vo1.-%)
- Schwefelgehalt (Aktivat): 2,73 %
- Abbrand: 56,7 %

### Eigenschaften:

- Rütteldichte: 0,491 g/cm³
- Rohdichte: 0,823 g/cm³
- MBT: 30 ml/0,1 g
- BET: 1594 m²/g
- Gesamtporenvolumen: 752 mm³/g
- Makroporen: 98 mm³/g = 13 %
- Mesoporen: 128 mm³/g = 17 %
- Mikroporen: 526 mm³/g = 70 %
- Ausbeute bezgl. Copolymer 43,9 %

Auf diese Weise sind somit "engporige" Aktivohlen mit folgenden Eigenschaften herstellbar:

| | |
|---|---|
| Porenvolumen | 600 bis 1120 mm³/g |
| V_{Mikro} | 530 bis 860 mm³/g (70 bis 88%) |
| V_{Meso} | 21 bis 130 mm³/g (3 bis 17 %) |
| V_{Makro} | 50 bis 120 mm²/g (9 bis 13%) |
| - BET-Oberfläche | 1400 bis 2300 m²/g |
| - MB-Titer | 25 bis 40 ml/0,1 g |
| - Rütteldichte | 0,37 bis 0,56 g/cm³ |

Die nachfolgenden Beispiele 15 bis 17 zeigen, daß durch eine entsprechende Variation der Reaktionsbedingungen auch eine entsprechend "weitporige" Aktivkohle, d.h. eine Aktivkohle mit einem hohen Gehalt an Makroporen, hergestellt werden kann. Derartige, "weitporige" Aktivkohlen zeichnen sich im Gegensatz zu den "engporigen" Aktivkohlen durch eine besonders hohe Adsorptionskinetik aus.

### Beispiel 15:

### Sulfonierungsbedingung

- Sulfonierungstemperatur: 150 °C
- Aufheizgeschwindigkeit: 2 K/min.
- Haltezeit: 240 min.
- Masseneinsatzverhältnis: m_{H2}SO₄/m_{Copolymer}=2:1

### Verkokungsbedingung

- Aufheizrate: 20 K/min.
- Temperatur: 750 °C
- Schwefelgehalt (Koks) 6,66 %
- Haltezeit: 5 min.
- Sintergrad: 2,2 %

### Aktivierungsbedingung

- Temperatur: 960 °C
- Zugabe Aktivierungsgas: 500 °C
- Dauer: 120 min.
- Aktivierungszusammensetzung: N₂(55 Vol.-%)/CO₂(10 Vol.-%)/H₂O_{D}(35 Vol.-%)
- Schwefelgehalt (Aktivat) : 3,3 %
- Abbrand: 60,8 %

### Eigenschaften:

- Rütteldichte: 0,444 g/cm³
- Rohdichte: 0,668 g/cm³
- MBT: 25 ml/0,1 g
- BET: 1363 m²/g
- Gesamtporenvolumen: 1028 mm³/g
- Makroporen: 291 mm³/g = 28 %
- Mesoporen: 231 mm³/g = 22 %
- Mikroporen: 506 mm³/g = 50 %
- Ausbeute bezgl. Copolymer 40,7 %

### Beispiel 16:

### Sulfonierungsbedingung

- Sulfonierungstemperatur: 200 °C
- Aufheizgeschwindigkeit: 10 K/min.
- Haltezeit: 0 min.
- Masseneinsatzverhältnis: m_{H2}SO₄/m_{Copolymer}=2:1

### Verkokungsbedingung

- Aufheizrate: 3 K/min.
- Temperatur: 750 °C
- Schwefelgehalt (Koks) 7,52 %
- Haltezeit: 5 min.
- Sintergrad: 19,5 %

### Aktivierungsbedingung

- Temperatur: 960 °C
- Zugabe Aktivierungsgas: 500 °C
- Dauer: 240 min.
- Aktivierungszusammensetzung: N₂(55 Vol.-%)/CO₂(10 Vol.-%)/H₂O_{D}(35 Vol.-%)
- Schwefelgehalt (Aktivat): 2,69 %
- Abbrand: 88,0 %

### Eigenschaften:

- Rütteldichte: 0,335 g/cm³
- Rohdichte: 0,570 g/cm³
- MBT: 35,5 ml/0,1 g
- BET: 2069 m²/g
- Gesamtporenvolumen: 1314 mm³/g
- Makroporen: 191 mm³/g = 14,5 %
- Mesoporen: 321 mm³/g = 24,5 %
- Mikroporen: 802 mm³/g = 61 %
- Ausbeute bezgl. Copolymer 12,5 %

### Beispiel 17:

### Sulfonierungsbedingung

- Sulfonierungstemperatur: 200 °C
- Aufheizgeschwindigkeit: 10 K/min.
- Haltezeit: 0 min.
- Masseneinsatzverhältnis: m_{H2}SO₄/m_{Copolymer}=2:1

### Verkokungsbedingung

- Aufheizrate: 20 K/min.
- Temperatur: 750 °C
- Schwefelgehalt (Koks) 6,73 %
- Haltezeit: 5 min.
- Sintergrad: 2,6 %

### Aktivierungsbedingung

- Temperatur: 960 °C
- Zugabe Aktivierungsgas: 500 °C
- Dauer: 240 min.
- Aktivierungszusammensetzung: N₂(55 Vol.-%)/CO₂(10 Vol.-%)/H₂O_{D}(35 Vol.-%)
- Schwefelgehalt (Aktivat): 2,44 %
- Abbrand: 76,2 %

### Eigenschaften:

- Rütteldichte: 0,366 g/cm³
- Rohdichte: 0,572 g/cm³
- MBT: 36 ml/0,1 g
- BET: 2160 m²/g
- Gesamtporenvolumen: 1301 mm³/g
- Makroporen: 261 mm³/g = 20 %
- Mesoporen: 187 mm³/g = 14 %
- Mikroporen: 853 mm³/g = 66 %
- Ausbeute bezgl. Copolymer 24,1 %

Das Eigenschaftsbild der hergestellten "weitporigen" Aktivkohlen ist daher wie folgt:
- Porenvolumen: 1000 bis 1320 mm³/g
- V_{Mikro}: 500 bis 850 mm³/g (50 bis 65 %)
- V_{Meso}: 180 bis 320 mm³/g (14 bis 25 %)
- V_{Makro}: 200 bis 300 mm³/g (15 bis 30 %)
- BET-Oberfläche: 1360 bis 2160 m²/g
- MB-Titer: 25 bis 36 ml/0,1 g
- Rütteldichte: 0,34 bis 0,44 g/cm³)

Um den Unterschied der erfindungsgemäßen Aktivkohle gegenüber herkömmlichen, kommerziell erhältlichen Aktivkohlen deutlich zu machen, wurden zwei weitere Beispiele für die erfindungsgemäße Aktivkohle hergestellt und ebenso wie die kommerziell erhältlichen Aktivkohlen SAR-0, Firma Kureha, Japan, und Ambersorb XEN 572, Fa. Rohm & Haas, USA, einer ausführlichen Untersuchung der Eigenschaften unterworfen. Die Ergebnisse dieser Untersuchungen sind in Tabelle 1 angegeben.

### Beispiel 18

### Sulfonierungsbedingung

- Sulfonierungstemperatur: 150 °C
- Aufheizgeschwindigkeit: 3 K/min.
- Haltezeit: 4 Std.
- Masseneinsatzverhältnis: m_{H2}SO₄/m_{Copolymer}=2:1

### Verkokungsbedingung

- Aufheizrate: 20 K/min.
- Temperatur: 750 °C

### Aktivierungsbedingung

- Temperatur: 960 °C
- Aktivierungszusammensetzung: N₂(35 Vol.-%)/CO₂(10 Vol.-%)/H₂O_{D}(55 Vol.-%)
- Abbrand: 60,8 %

### Beispiel 19

### Sulfonierungsbedingung

- Sulfonierungstemperatur: 200 °C
- Aufheizgeschwindigkeit: 10 K/min.
- Masseneinsatzverhältnis: m_{H2}SO₄/m_{Copolymer}=2:1

### Verkokungsbedingung

- Aufheizrate: 3 K/min.
- Temperatur: 750 °C

### Aktivierungsbedingung

- Temperatur: 960 °C
- Aktivierungszusammensetzung: N₂(55 Vol.-%)/CO₂(10 Vol.-%)/H₂O_{D}(35 Vol.-%)
- Abbrand: 44,3 %

Analysiert wurde die Porenstruktur mittels N₂-Sorptometrie bei 77 K (vergleiche von Kienle, H. Bäder E., "Aktivkohle und ihre industrielle Anwendung" F. Enke Verlag, Stuttgart 1980) und Hg-Porosimetrie, woraus die Porenradienverteilung und spezifische Oberfläche (BET) [DIN 66131] sowie das Mikroporenvolumen nach der DEBININ-Methode (vergleiche Patrick, J.W. "Porosity in carbons") E. Arnold, London 1995) abgeleitet wurden. Gemessen wurden weiterhin der Methylenblautiter als Maßzahl für die Adsorptionskapazität von Molekülen mit ca. 1 - 1,5 nm Durchmesser (vergleiche von Kienle, H. Bäder, E., "Aktivkohle und ihre industrielle Anwendung", F. Enke Verlag, Stuttgart 1980) sowie die Butanadsorption (0,5 Vol.-% n-Butan in Helium). Aus letzterer Messung wurde die Gleichgewichtsbeladung sowie die Adsorptionsgeschwindigkeit abgeleitet.

**Tabelle 1 : Gegenüberstellung erfindungsgemäßer Aktivkohleproben mit kommerziellen Referenzprodukten**

| | | Erfindungsgemäße Aktivkohle | | Referenzprodukte | |
|---|---|---|---|---|---|
| | | Beispiel 10 | Beispiel 19 | SAR-0 (Fa. Kureha; Japan) | Ambersorb XEN 572 (Fa. Rohm & Haas; USA) |
| Porenvolumen | [mm³/g] | 1028 | 602 | 596 | 945 |
| davon in Poren | | | | | |
| rₚ < 3,8 nm | [mm³/g] | 506 (49,2%) | 526 (87,4%) | 509 (85,4%) | 381 (40,3%) |
| 3,8< rₚ < 25 mm | [mm³/g] | 231 (22,5%) | 21 (3,5%) | 53 (8,9%) | 532 (56,3%) |
| rₚ>25 nm | [mm³/g] | 291 (28,3%) | 55 (9,1%) | 34 (5,7%) | 32 (3,4%) |
| Ausgewählte Porenvolumenanteile im Porenradienbereich | | | | | |
| 0,8 - 1 nm | [mm³/g] | 131 | 142 | 179 | 96 |
| 1 - 2 nm | [mm³/g] | 300 | 294 | 355 | 146 |
| 10 - 30 nm | [mm³/g] | 170 | 7 | 22 | 490 |
| 100 - 1000 nm | [mm³/g] | 110 | 12 | 12 | 10 |
| Mikroporenvolumen nach DUBININ | | | | | |
| aus N₂-Isotherme | [mm³/g] | 522 | 550 | 603 | 465 |
| aus Benzen-Isotherme (20°C) | [mm³/g] | 497 | 519 | 501 | 409 |
| Mittlere Mikroporenweite | | | | | |
| aus N₂-Isotherme | [nm] | 1,65 | 1,69 | 1,96 | 1,28 |
| aus Benzen-Isotherme (20°C) | [nm] | 1,36 | 1,12 | 1,29 | 0,84 |
| Spezifische Oberfläche (BET) | [m²/g] | 1363 | 1387 | 1319 | 1126 |
| Methylenblautiter (MBT) | [ml/0,1g] | 25 | 25 | 24,5 | 23,5 |
| Butanadsorption/-desorption | | | | | |
| Gleichgewichtsbeladung | [%] | 15,95 | 17,22 | 15,09 | 16,27 |
| Geschwindigkeit Adsorption | [%/min] | 15,0 | 4,5 | 10,0 | 6,9 |
| Geschwindigkeit Desorption* | [%/min] | 12,0 | 5,0 | 8,0 | 6,0 |
| Benzenadsorption | | | | | |
| Gleichgewichtsbeladung | | | | | |
| pl/ps 0,001 | [%] | 20,5 | 24,1 | 21,3 | 22,3 |
| pl/ps 0,01 | [%] | 31,4 | 34,6 | 32,3 | 29,1 |
| pl/ps 0,1 | [%] | 40,1 | 42,3 | 40,4 | 34,1 |
| pl/ps 0,9 | [%] | 47,6 | 45,6 | 44,1 | 42,8 |
| Rüffehlichte | [g/cm³] | 0,440 | 0,553 | 0,589 | 0,482 |

| | | | | | |
|---|---|---|---|---|---|
| * Desorption bis 50% Restbeladung | | | | | |

## Patentansprüche

1. Verfahren zur Herstellung von Aktivkohle aus Polymeren mit aromatischen Kernen, insbesondere aus einem Styrol-Divinylbenzol-Copolymeren, mit den Verfahrensschritten:
a) Sulfonieren des Polymers mit konz. H₂SO₄, wobei das Verhältnis der Masse der verwendeten konz. H₂SO₄ zu der Masse des eingesetzten Polymers 0,5:1 bis 4:1 ist,
b) Abfiltrieren der überschüssigen Schwefelsäure nach dem Sulfonieren und sodann Verkoken bzw. Pyrolysieren des ungewaschenen sulfonierten Produkts; und
c) Aktivieren des durch das Verkoken bzw. Pyrolysieren erhaltenen Kokses.

2. Verfahren gemäß Anspruch 1,
**dadurch gekennzeichnet,**
**daß** das Polymer in Schritt a) bei Umgebungstemperatur zum Sulfonieren mit konz. H₂SO₄ versetzt und auf eine Sulfonierungstemperatur im Bereich von 110 bis 160 °C aufgeheizt wird.

3. Verfahren gemäß Anspruch 1 oder 2,
**dadurch gekennzeichnet,**
**daß** das Aufheizen in Schritt a) mit einer Rate von etwa 3 bis 20 K/min. erfolgt, insbesondere mit einer Rate von 10 bis 20 K/min.

4. Verfahren gemäß Anspruch 3,
**dadurch gekennzeichnet,**
**daß** das Aufheizen in Schritt a) mit einer Rate von 15 K/min erfolgt.

5. Verfahren gemäß einem der Ansprüche 1 bis 4,
**dadurch gekennzeichnet,**
**daß** das Gemisch aus Polymer und konz. H₂SO₄ für eine Zeit im Bereich von 0 bis 60 Minuten auf der Sulfonierungstemperatur gehalten wird.

6. Verfahren gemäß einem der Ansprüche 1 bis 5,
**dadurch gekennzeichnet,**
**daß** das Verhältnis der Masse der verwendeten konz. H₂SO₄ zu der Masse des eingesetzten Polymers 1:1 bis 2:1 ist.

7. Verfahren gemäß einem der vorhergehenden Ansprüche,
**dadurch gekennzeichnet,**
**daß** das sulfonierte Polymer nach dem Abfiltrieren der überschüssigen Schwefelsäure in Schritt b) zum Verkoken bzw. Pyrolysieren auf eine Temperatur im Bereich von 650 bis 850 °C gebracht wird, insbesondere 700 bis 800 °C.

8. Verfahren gemäß Anspruch 7,
**dadurch gekennzeichnet,**
**daß** das sulfonierte Polymer nach dem Abfiltrieren der überschüssigen Schwefelsäure zum Verkoken bzw. Pyrolysieren auf eine Temperatur von 750 °C aufgeheizt wird.

9. Verfahren gemäß Anspruch 7 oder 8,
**dadurch gekennzeichnet,**
**daß** das sulfonierte Polymer mit einer Geschwindigkeit von 1 bis 10 K/min., insbesondere 5 bis 10 K/min. auf Pyrolysetemperatur gebracht wird.

10. Verfahren gemäß Anspruch 9,
**dadurch gekennzeichnet,**
**daß** das sulfonierte Polymer mit einer Geschwindigkeit im Bereich von 8 bis 10 K/min, auf Pyrolysetemperatur gebracht wird.

11. Verfahren gemäß einem der Ansprüche 7 bis 10,
**dadurch gekennzeichnet,**
**daß** die Pyrolysetemperatur für einen Zeitraum von 2 bis 10 min., insbesondere 3 bis 7 min., gehalten wird.

12. Verfahren gemäß Anspruch 11,
**dadurch gekennzeichnet,**
**daß** das Polymer in Schritt a) bei Umgebungstemperatur zum Sulfonieren mit konz. H₂SO₄ versetzt und auf eine Sulfonierungstemperatur im Bereich von 130 bis 300 °C aufgeheizt wird, insbesondere 130 bis 200 °C.

13. Verfahren gemäß Anspruch 12,
**dadurch gekennzeichnet,**
**daß** das Aufheizen in Schritt a) mit einer Rate von etwa 3 bis 20 K/min. erfolgt, insbesondere 10 bis 20 K/min.

14. Verfahren gemäß Anspruch 13,
**dadurch gekennzeichnet,**
**daß** das Aufheizen mit einer Rate von etwa 15 K/min. erfolgt.

15. Verfahren nach einem der Ansprüche 12 bis 14,
**dadurch gekennzeichnet,**
**daß** die Sulfonierung nach Erreichen der Sulfonierungstemperatur beendet wird.

16. Verfahren gemäß einem der Ansprüche 12 bis 15,
**dadurch gekennzeichnet,**
**daß** das Verhältnis der Masse der verwendeten konz. H₂SO₄ zu der Masse des eingesetzten Polymers 2:1 ist.

17. Verfahren gemäß einem der Ansprüche 12 bis 16,
**dadurch gekennzeichnet,**
**daß** das sulfonierte Polymer nach dem Abfiltrieren der überschüssigen Schwefelsäure in Schritt b) zum Verkoken bzw. Pyrolysieren auf eine Temperatur im Bereich von 650 bis 850 °C gebracht wird, insbesondere 700 bis 800 °C.

18. Verfahren gemäß Anspruch 17,
**dadurch gekennzeichnet,**
**daß** das sulfonierte Polymer nach dem Abfiltrieren der überschüssigen Schwefelsäure zum Verkoken bzw. Pyrolysieren auf eine Temperatur von 750 °C aufgeheizt wird.

19. Verfahren gemäß einem der Ansprüche 17 oder 18,
**dadurch gekennzeichnet,**
**daß** zum Erreichen der Pyrolysetemperatur mit einer Rate von 20 bis 50 K/min. erhitzt wird.

20. Verfahren gemäß einem der Ansprüche 17 bis 19,
**dadurch gekennzeichnet,**
**daß** die Pyrolysetemperatur für einen Zeitraum von 0 bis 10 min. gehalten wird, insbesondere für eine Zeitraum von 3 bis 7 min.

21. Verfahren gemäß einem der Ansprüche 12 bis 20,
**dadurch gekennzeichnet,**
**daß** eine Aktivierung des durch Verkoken bzw. Pyrolysieren erhaltenen Kokses bei einer Temperatur im Bereich von 900 bis 960 °C durchgeführt wird.

22. Verfahren gemäß Anspruch 21,
**dadurch gekennzeichnet,**
**daß** das Aktivierungsgas aus 55 Vol.-% N₂, 10 Vol.-% CO₂ und 35 Vol.-% H₂O besteht.

23. Verfahren gemäß Anspruch 21 oder 22,
**dadurch gekennzeichnet,**
**daß** das Aktivierungsgas ab einer Temperatur von 500 °C über die Aktivkohle geleitet wird.

24. Verfahren gemäß einem der Ansprüche 21 bis 23,
**dadurch gekennzeichnet,**
**daß** die Aktivierung für einen Zeitraum von 30 bis 360 min. durchgeführt wird.

25. Verfahren gemäß einem der Ansprüche 21 bis 24,
**dadurch gekennzeichnet,**
**daß** das Verfahren bis zu einem Abbrand von 40 bis 75 % durchgeführt wird, insbesondere bis zu einem Abbrand von 40 bis 60 %.

26. Verfahren zur Herstellung von Aktivkohle gemäß Anspruch 1,
**dadurch gekennzeichnet,**
**daß** das Polymer in Schritt a) bei Umgebungstemperatur zum Sulfonieren mit konz. H₂SO₄ versetzt und auf eine Sulfonierungstemperatur im Bereich von 150 bis 200 °C aufgeheizt wird, bevorzugt 150 °C.

27. Verfahren gemäß Anspruch 26,
**dadurch gekennzeichnet,**
**daß** das Aufheizen in Schritt a) mit einer Rate von etwa 1 bis 10 K/min, erfolgt, insbesondere mit einer Rate von 1 bis 4 K/min.

28. Verfahren gemäß Anspruch 26 oder 27,
**dadurch gekennzeichnet,**
**daß** die Sulfonierungstemperatur für einen Zeitraum von 0 bis 240 min. gehalten wird, insbesondere für einen Zeitraum von 240 min. bei 150 °C und 0 min. bei 200 °C.

29. Verfahren gemäß einem der Ansprüche 26 bis 28,
**dadurch gekennzeichnet,**
**daß** das Verhältnis der Masse der verwendeten konz. H₂SO₄ zu der Masse des eingesetzten Polymers 2:1 ist.

30. Verfahren gemäß einem der Ansprüche 26 bis 29,
**dadurch gekennzeichnet,**
**daß** das sulfonierte Polymer nach dem Abfiltrieren der überschüssigen Schwefelsäure in Schritt b) zum Verkoken bzw. Pyrolysieren auf eine Temperatur im Bereich von 650 bis 850 °C gebracht wird, insbesondere 700 bis 800 °C.

31. Verfahren gemäß einem der Ansprüche 26 bis 30,
**dadurch gekennzeichnet,**
**daß** das sulfonierte Polymer nach dem Abfiltrieren der überschüssigen Schwefelsäure zum Verkoken bzw. Pyrolysieren auf eine Temperatur von 750 °C aufgeheizt wird.

32. verfahren gemäß einem der Ansprüche 26 bis 31,
**dadurch gekennzeichnet,**
**daß** mit einer Rate von 3 bis 50 K/min, auf Pyrolysetemperatur aufgeheizt wird, insbesondere mit einer Rate von 15 bis 25 K/min.

33. Verfahren gemäß einem der Ansprüche 26 bis 32,
**dadurch gekennzeichnet,**
**daß** die Pyrolysetemperatur für einen Zeitraum von 0 bis 10 min. gehalten wird, insbesondere für einen Zeitraum für 3 bis 7 Minuten.

34. Verfahren gemäß einem der Ansprüche 26 bis 33,
**dadurch gekennzeichnet,**
**daß** eine Aktivierung in einem Temperaturbereich von 900 bis 960 °C durchgeführt wird.

35. Verfahren gemäß Anspruch 34,
**dadurch gekennzeichnet,**
**daß** das Aktivierungsgas zu 55 Vol.-% aus N₂, 10 Vol.-% aus CO₂ und 35 Vol.-% aus H₂O besteht.

36. Verfahren gemäß Anspruch 35,
**dadurch gekennzeichnet,**
**daß** das Aktivierungsgas ab einer Temperatur von 500 °C zugegeben wird.

37. Verfahren gemäß einem der Ansprüche 34 bis 36,
**dadurch gekennzeichnet,**
**daß** die Aktivierung für eine Dauer von 30 bis 360 min. durchgeführt wird, bevorzugt für eine Dauer von 90 bis 240 min.

38. Verfahren gemäß einem der Ansprüche 34 bis 37,
**dadurch gekennzeichnet,**
**daß** die Aktivierung solange durchgeführt wird, bis ein Abbrand von 60 bis 90 % erreicht ist, insbesondere bis zu ein Abbrand von 60 % erreicht ist.

## Claims

1. Process for producing activated carbon from polymers having aromatic nuclei, in particular from a styrene-divinylbenzene copolymer, having the process steps:
a) sulphonation of the polymer with concentrated H₂SO₄, the ratio of the mass of concentrated H₂SO₄ used to the mass of the polymer used being from 0.5:1 to 4:1,
b) filtering off the excess sulphuric acid after sulphonation and then coking or pyrolysis of the unwashed sulphonated products; and
c) activating the coke produced by the coking or pyrolysis.

2. Process according to Claim 1, **characterized in that** concentrated H₂SO₄ is added to the polymer in step a) at ambient temperature for the sulphonation and the mixture is heated to a sulphonation temperature in the range 110 to 160°C.

3. Process according to Claim 1 or 2, **characterized in that** the heating in step a) is carried out at a rate of about 3 to 20 K/min, in particular at a rate of 10 to 20 K/min.

4. Process according to Claim 3, **characterized in that** the-heating in step a) is carried out at a rate of 15 K/min.

5. Process according to one of Claims 1 to 4, **characterized in that** the mixture of polymer and concentrated H₂SO₄ is kept at the sulphonation temperature for a time in the range 0 to 60 minutes.

6. Process according to one of Claims 1 to 5, **characterized in that** the ratio of the mass of concentrated H₂SO₄ used to the mass of the polymer used is 1:1 to 2:1.

7. Process according to one of the preceding claims, **characterized in that** the sulphonated polymer, after the excess sulphuric acid has been filtered off in step b), is brought for coking or pyrolysis to a temperature in the range 650 to 850°C, in particular 700 to 800°C.

8. Process according to Claim 7, **characterized in that** the sulphonated polymer, after the excess sulphuric acid has been filtered off, is heated for coking or pyrolysis to a temperature of 750°C.

9. Process according to Claim 7 or 8, **characterized in that** the sulphonated polymer is brought to pyrolysis temperature at a rate of 1 to 10 K/min, in particular 5 to 10 K/min.

10. Process according to Claim 9, **characterized in that** the sulphonated polymer is brought to pyrolysis temperature at a rate in the range 8 to 10 K/min.

11. Process according to one of Claims 7 to 10, **characterized in that** the pyrolysis temperature is held for a period of 2 to 10 min, in particular 3 to 7 min.

12. Process according to Claim 11, **characterized in that** concentrated H₂SO₄ is added to the polymer in step a) at ambient temperature for sulphonation and the mixture is heated to a sulphonation temperature in the range 130 to 300°C, in particular 130 to 200°C.

13. Process according to Claim 12, **characterized in that** the heating in step a) is carried out at a rate of about 3 to 20 K/min, in particular 10 to 20 K/min.

14. Process according to Claim 13, **characterized in that** the heating is carried out at a rate of about 15 K/min.

15. Process according to one of Claims 12 to 14, **characterized in that** the sulphonation is terminated after the sulphonation temperature is reached.

16. Process according to one of Claims 12 to 15, **characterized in that** the ratio of the mass of the concentrated H₂SO₄ used to the mass of the polymer used is 2:1.

17. Process according to one of Claims 12 to 16, **characterized in that** the sulphonated polymer, after the excess sulphuric acid has been filtered off in step b), is brought, for coking or pyrolysis, to a temperature in the range 650 to 850°C, in particular 700 to 800°C.

18. Process according to Claim 17, **characterized in that** the sulphonated polymer, after the excess sulphuric acid has been filtered off, is heated, for coking or pyrolysis, to a temperature of 750°C.

19. Process according to one of Claims 17 or 18, **characterized in that** heating is carried out at a rate of 20 to 50 K/min to reach the pyrolysis temperature.

20. Process according to one of Claims 17 to 19, **characterized in that** the pyrolysis temperature is held for a period of 0 to 10 min, in particular for a period of 3 to 7 min.

21. Process according to one of Claims 12 to 20, **characterized in that** the coke produced by coking or pyrolysis is activated at a temperature in the range 900 to 960°C.

22. Process according to Claim 21, **characterized in that** the activation gas consists of 55% by volume N₂, 10% by volume CO₂ and 35% by volume H₂O.

23. Process according to Claim 21 or 22, **characterized in that** the activation gas is passed over the activated carbon from a temperature of 500°C.

24. Process according to one of Claims 21 to 23, **characterized in that** the activation is carried out for a period of 30 to 360 min.

25. Process according to one of Claims 21 to 24, **characterized in that** the process is carried out up to a degree of burn-up of 40 to 75%, in particular up to a degree of burn-up of 40 to 60%.

26. Process for producing activated carbon according to Claim 1, **characterized in that** concentrated H₂SO₄ is added to the polymer in step a) at ambient temperature for sulphonation and the mixture is heated to a sulphonation temperature in the range 150 to 200°C, preferably 150°C.

27. Process according to Claim 26, **characterized in that** the heating in step a) is carried out at a rate of about 1 to 10 K/min, in particular at a rate of 1 to 4 K/min.

28. Process according to Claim 26 or 27, **characterized in that** the sulphonation temperature is held for a period of 0 to 240 min, in particular for a period of 240 min, at 150°C and 0 min at 200°C.

29. Process according to one of Claims 26 to 28, **characterized in that** the ratio of the mass of the concentrated H₂SO₄ used to the mass of the polymer used is 2:1.

30. Process according to one of Claims 26 to 29, **characterized in that** the sulphonated polymer, after the excess sulphuric acid has been filtered off in step b), is brought, for coking or pyrolysis, to a temperature in the range 650 to 850°C, in particular 700 to 800°C.

31. Process according to one of Claims 26 to 30, **characterized in that** the sulphonated polymer, after the excess sulphuric acid has been filtered off, is heated, for coking or pyrolysis, to a temperature of 750°C.

32. Process according to one of Claims 26 to 31, **characterized in that** the heating to pyrolysis temperature is carried out at a rate of 3 to 50 K/min, in particular at a rate of 15 to 25 K/min.

33. Process according to one of Claims 26 to 32, **characterized in that** the pyrolysis temperature is held for a period of 0 to 10 min, in particular for a period of 3 to 7 minutes.

34. Process according to one of Claims 26 to 33, **characterized in that** activation is carried out in a temperature range of 900 to 960°C.

35. Process according to Claim 34, **characterized in that** the activation gas consists of 55% by volume N₂, 10% by volume CO₂ and 35% by volume H₂O.

36. Process according to Claim 35, **characterized in that** the activation gas is added from a temperature of 500°C.

37. Process according to one of Claims 34 to 36, **characterized in that** the activation is carried out for a period of 30 to 360 min, preferably for a period of 90 to 240 min.

38. Process according to one of Claims 34 to 37, **characterized in that** the activation is carried out until a degree of burn-up of 60 to 90% is achieved, in particular until a degree of burn-up of 60% is achieved.

## Revendications

1. Procédé pour la fabrication de charbons actifs à partir de polymères comportant des noyaux aromatiques, en particulier à partir de copolymères de styrène-divinylbenzène, procédé comportant les étapes suivantes :
a) sulfonation du polymère au moyen d'acide sulfurique concentré, le rapport de la masse de l'acide sulfurique concentré utilisé à la masse du polymère traité étant de 0,5:1 à 4:1,
b) élimination par filtration de l'excès d'acide sulfurique après la sulfonation, puis cokéfaction ou pyrolyse du produit sulfoné non lavé ; et facultativement
c) activation du coke obtenu par la cokéfaction ou la pyrolyse.

2. Procédé selon la revendication 1, **caractérisé en ce que**, à l'étape a), le polymère est transformé en vue de la sulfonation au moyen d'acide sulfurique concentré à température ambiante et est porté par échauffement à une température de sulfonation de l'ordre de 110 à 160°C.

3. Procédé selon l'une des revendications 1 ou 2, **caractérisé en ce que** l'échauffement à l'étape a) est conduit à une vitesse d'environ 3 à 20 K/min, en particulier à une vitesse de 10 à 20 K/min.

4. Procédé selon la revendication 3, **caractérisé en ce que** l'échauffement à l'étape a) est conduit à une vitesse de 15 K/min.

5. Procédé selon l'une des revendications 1 à 4, **caractérisé en ce que** le mélange de polymères et d'acide sulfurique concentré est maintenu pendant une durée de l'ordre de 0 à 60 minutes à la température de sulfonation.

6. Procédé selon l'une des revendications 1 à 5, **caractérisé en ce que** le rapport de la masse de l'acide sulfurique concentré utilisé à la masse du polymère traité est de 1:1 à 2:1.

7. Procédé selon l'une des revendications précédentes, **caractérisé en ce que** le polymère sulfoné, après élimination par filtration de l'acide sulfurique en excès à l'étape b) est porté à une température de 650 à 850°C et en particulier de 700 à 800°C en vue de sa cokéfaction, ou pyrolyse.

8. Procédé selon la revendication 7, **caractérisé en ce que** le polymère sulfoné, après séparation par filtration de l'acide sulfurique en excès est échauffé à une température de 750°C en vue de sa cokéfaction ou pyrolyse.

9. Procédé selon l'une des revendications 7 ou 8, **caractérisé en ce que** le polymère sulfoné est porté à la température de pyrolyse à une vitesse de 1 à 10 K/min, en particulier de 5 à 10 K/min.

10. Procédé selon la revendication 9, **caractérisé en ce que** le polymère sulfoné est porté à la température de pyrolyse à une vitesse de l'ordre de 8 à 10 K/min.

11. Procédé selon l'une des revendications 7 à 10, **caractérisé en ce que** la température de pyrolyse est maintenue pendant une durée de 2 à 10 minutes et en particulier de 3 à 7 minutes.

12. Procédé selon la revendication 11, **caractérisé en ce que** le polymère à l'étape a) est mélangé à température ambiante avec de l'acide sulfurique concentré en vue de sa sulfonation et est porté par échauffement à une température de sulfonation de l'ordre de 130 à 300°C, en particulier de 130 à 200°C.

13. Procédé selon la revendication 12, **caractérisé en ce que** l'échauffement à l'étape a) est conduit à une vitesse d'environ 3 à 20 K/min et en particulier de 10 à 20 K/min.

14. Procédé selon la revendication 13, **caractérisé en ce que** le chauffage est conduit à une vitesse d'environ 15 K/min.

15. Procédé selon l'une des revendications 12 à 14, **caractérisé en ce que** la sulfonation est interrompue après que soit atteinte la température de sulfonation.

16. Procédé selon l'une des revendications 12 à 15, **caractérisé en ce que** le rapport de la masse de l'acide sulfurique concentré utilisé à la masse du polymère traité est de 2:1.

17. Procédé selon l'une des revendications 12 à 16, **caractérisé en ce que** le polymère sulfoné après élimination par filtration de l'acide sulfurique en excès à l'étape b) est porté à une température de l'ordre de 650 à 850°C en particulier de 700 à 800°C en vue de sa cokéfaction ou pyrolyse.

18. Procédé selon la revendication 17, **caractérisé en ce que** le polymère sulfoné, après élimination par filtration de l'acide sulfurique en excès est porté à une température de 750°C en vue de sa cokéfaction ou pyrolyse.

19. Procédé selon l'une des revendications 17 ou 18, **caractérisé en ce que** l'on atteint la température de pyrolyse à une vitesse de 20 à 50 K/min.

20. Procédé selon l'une des revendications 17 à 19, **caractérisé en ce que** la température de pyrolyse est maintenue pendant une durée de 0 à 10 minutes, en particulier pendant une durée de 3 à 7 minutes.

21. Procédé selon l'une des revendications 12 à 20, **caractérisé en ce que** l'on procède à une activation du coke obtenu par cokéfaction ou pyrolyse, à une température de l'ordre de 900 à 960°C.

22. Procédé selon la revendication 21, **caractérisé en ce que** le gaz d'activation se compose de 55% en volume de N₂, 10% en volume de CO₂ et 35% en volume de H₂O.

23. Procédé selon l'une des revendications 21 ou 22, **caractérisé en ce que** le gaz d'activation est conduit sur le charbon actif à une température de 500°C.

24. Procédé selon l'une des revendications 21 à 23, **caractérisé en ce que** l'activation est conduite pendant une durée de 30 à 360 minutes.

25. Procédé selon l'une des revendications 21 à 24, **caractérisé en ce que** le procédé est conduit jusqu'à une combustion de 40 à 75%, en particulier jusqu'à une combustion de 40 à 60%.

26. Procédé pour la préparation d'un charbon actif selon la revendication 1, **caractérisé en ce que** le polymère est mélangé à l'étape a) avec de l'acide sulfurique concentré en vue de sa sulfonation à température ambiante et échauffé à une température de sulfonation de l'ordre de 150 à 200°C, de préférence à 150°C.

27. Procédé selon la revendication 26, **caractérisé en ce que** l'échauffement à l'étape a) est conduit à une vitesse d'environ 1 à 10 K/min et de préférence à une vitesse de 1 à 4 K/min.

28. Procédé selon l'une des revendications 26 ou 27, **caractérisé en ce que** la température de sulfonation est maintenue pendant une durée de 0 à 240 minutes, en particulier pendant une durée de 240 minutes à 150°C et 0 minutes à 200°C.

29. Procédé selon l'une des revendications 26 à 28, **caractérisé en ce que** le rapport de la masse de l'acide sulfurique concentré utilisé à la masse du polymère traité est de 2:1.

30. Procédé selon l'une des revendications 26 à 29, **caractérisé en ce que** le polymère sulfoné, après élimination par filtration de l'acide sulfurique en excès à l'étape b) est porté en vue de sa cokéfaction ou pyrolyse à une température de l'ordre de 650 à 850°C, en particulier de 700 à 800°C.

31. Procédé selon l'une des revendications 26 à 30, **caractérisé en ce que** le polymère sulfoné, après élimination par filtration de l'acide sulfurique en excès est échauffé à une température de 750°C en vue de sa cokéfaction ou pyrolyse.

32. Procédé selon l'une des revendications 26 à 31, **caractérisé en ce que** la température est élevée jusqu'à la température de pyrolyse jusqu'à une vitesse de 3 à 50 K/min, et en particulier à une vitesse de 15 à 25 K/min.

33. Procédé selon l'une des revendications 26 à 32, **caractérisé en ce que** la température de pyrolyse est maintenue pendant une durée de 0 à 10 minutes et en particulier pendant une durée de 3 à 7 minutes.

34. Procédé selon l'une des revendications 26 à 33, **caractérisé en ce que** l'on procède à une activation dans un domaine de température de 900 à 960°C.

35. Procédé selon la revendication 34, **caractérisé en ce que** le gaz d'activation se compose de 55% en volume de N₂, 10% en volume de CO₂ et 35% en volume de H₂O.

36. Procédé selon la revendication 35, **caractérisé en ce que** le gaz d'activation est abaissé à une température de 500°C.

37. Procédé selon l'une des revendications 34 à 36, **caractérisé en ce que** l'activation est conduite pendant une durée de 30 à 360 minutes et de préférence pendant une durée de 90 à 240 minutes.

38. Procédé selon l'une des revendications 34 à 37, **caractérisé en ce que** l'activation est conduite jusqu'à ce que soit atteinte une combustion de 60 à 90% et en particulier jusqu'à une combustion de 60%.
